# EUROPEAN PATENT SPECIFICATION

(11) **EP 1 255 235 B1**
(45) Date of publication and mention of the grant of the patent: **29.11.2006**
(21) Application number: 02252888.9
(22) Date of filing: 24.04.2002
(51) Int. Cl.: G08B 15/00, B60R 25/10

(54) **Vehicle security system**
Fahrzeugsicherheitssystem
Dispositif de sécurité pour véhicule

(30) Priority: 05.05.2001 GB 0111125
(43) Date of publication of application: 06.11.2002
(73) Proprietor: Land Rover, Gaydon, Warwick CV35 0RR (GB)
(72) Inventor: Talbot, Kevin Trevor, Lichfield, Staffordshire WS137JJ (GB)
(74) Representative: Messulam, Alec Moses

(56) References cited:
- WO-A-00/58136
- US-A- 5 451 926
- PATENT ABSTRACTS OF JAPAN vol. 2000, no. 11, 3 January 2001 (2001-01-03) & JP 2000 213216 A (TOKAI RIKA CO LTD), 2 August 2000 (2000-08-02)

## Description

### Field of the invention

The present invention relates to a vehicle security systems.

### Background of the invention

Vehicle security systems, especially for public transport vehicles, have already been proposed, for example in US 5,926,210, that make use of on-board cameras to record events taking place within and outside a vehicle. The cameras are used to record image data when a panic button is pressed or when an impact sensor detects a collision. The image data is recorded on disc and may also be relayed to a remote location by a radio link.

Intrusion detectors that incorporate a video recording system are also known, for example from FR 2,784,065, which transmit not only the visual data but also data locating the position where the recording took place.

A problem encountered with a security system having even this level of sophistication is that the radio or the vehicle cellular telephone system, which is relied upon to summon assistance, may be out of action for a variety of reason. For example, its external antenna may have been broken or the vehicle may simply be out of range of a telephone cell.

US 5451926 discloses a vehicle security system in which pre-recorded voice messages are played and an SOS signal transmitted by wireless when an incident is detected, whereas WO 00/58136 discloses a vehicle security system which uses a commercial two-way communication module (pager or cell-phone) to signal to a service provider over an RF band in response to an incident or signal sent to the module from a remote sender/locking controller.

### Object of the invention

The present invention seeks therefore to provide a security system that is capable of summoning help even in the event of failure of its own radio communication system.

### Summary of the invention

According to one aspect of the present invention, there is provided a security system for a plurality of motor vehicles, each of which has a remote locking system that operates on a frequency common to each vehicle, and a telecommunications system, and wherein each vehicle includes a transmitter arranged to transmit a distress signal on said frequency when an alarm condition is detected, and wherein the remote locking system of each vehicle is arranged for receiving said distress signal from a neighbouring vehicle and for initiating an appropriate response. Said appropriate response may comprise relaying a further distress signal by means of the telecommunications system.

In the invention, use is made of the remote locking system to transmit a distress signal so that assistance may be requested even when the telecommunications system is inoperative for any reason.

According to a second aspect of the invention, there is provided a security apparatus for a motor vehicle forming part of a security system as aforesaid, the apparatus including a remote locking system and a telecommunications system, and a transmitter arranged to transmit a distress signal at the frequency of the remote locking system, which frequency is common to all motor vehicles within the security system, when an alarm condition is detected.

According to a third aspect of the invention, there is provided a security apparatus for a motor vehicle forming part of a security system as aforesaid, the apparatus including a remote locking system and a telecommunications system, wherein the remote locking system includes a receiver connected to a decoder for sensing when a distress signal is received from another near-by vehicle on a common frequency of the remote locking system, and the telecommunications system is arranged for relaying a further distress signal to a remote location in response to receipt of the distress signal from the near-by vehicle.

In the invention, help may be summoned from near-by vehicles so that in the event of the telecommunications system of the vehicle under attack being inoperative, the telecommunications system of a near-by vehicle can be used to relay a request for assistance to a remote location.

By fitting all the vehicles of a given manufacturer, or indeed all vehicles, with a means for communicating with one another over the radio band used the remote locking system, the invention can provide a network of vehicle security systems that look out for each other as well as for themselves and give assistance to each other when notified of an attack on any vehicle in the network. The network is geographically constrained by the range of the transmitters and receivers of the remote locking systems and for this reason there is little danger of system overload. In a sense, therefore the invention establishes a "neighbourhood watch" system rather than a network consisting of all the vehicles fitted with security systems of the invention.

The nature of the signal that is transmitted to summon help may vary considerably. For example, it could be transmitted to a central monitoring station. Alternatively, it could be transmitted as a message to a pager or to an email address of the owner of the vehicle under attack.

The relayed information may consist of data received from the vehicle under attack, such as a vehicle ID, GPS location information, or images obtained by on-board video cameras of the security system.

Alternatively, the data may be generated at least in part by the vehicle acting as a relay station. For example, the vehicle giving assistance may activate its own external video cameras and their images to the remote location.

Both in the vehicle under attack and in a vehicle giving assistance, recording means may be provided to record image data for later retrieval or transmission.

An alarm condition may result from a variety of triggers, which may be conventional. For example, the security system may have means for detecting the opening of doors, vehicle tilt, changes in magnetic or electric field, video acoustic or infra-red sensors for detecting an intrusion into the body of the vehicle, breaking of glass, or shocks caused by a collision or impact with a heavy implement. Indeed, any signal indicative of an unauthorised attempt to enter into or tamper with the vehicle may serve to trigger an alarm condition.

It is preferred that the security system have first video cameras with fields of view external to the vehicle and second video cameras with fields of view in the vehicle. When a distress signal is received from a near-by vehicle, then the images from the first video cameras are preferably transmitted to a central location or an email address or stored for later transmission if the vehicle communications system is temporarily inactive.

It is appreciated that when all the components of the security system are active, the drain on the vehicle battery may be substantial. In order to mitigate this problem, it is preferred for the security system to different modes of operation with different quiescent current requirements.

In a preferred embodiment, the security system has a first maximum diligence mode in which internal and external video cameras are all activated, a second reduced current mode in which the external video cameras are inoperative but the system using other means such as active infra-red and microwave continues to monitor the area outside the vehicle and a third stand-by mode in which only the internal cameras and devices sensitive to activity within or at the perimeter of the vehicle can trigger an alarm condition. In this way, the user may select the mode best suited to the environment where the vehicle is parked while limiting the drain on the vehicle battery.

When such a vehicle is operating in a reduced current mode, it is preferred that it should switch to itself to the maximum diligence mode automatically when an alarm condition is activated or a distress signal is received from another vehicle in the vicinity.

### Brief description of the drawings

The invention will now be described further, by way of example, with reference to the accompanying drawings, in which the single diagram shows a block diagram of a vehicle security system of the invention.

### Detailed description of the preferred embodiment

The illustrated vehicle security system comprises an on board computer 22 and modem connected to a keyboard 24. The computer 22 is further connected to a mobile phone 40 via its internal modem, and to a global positioning system (GPS) receiver 26 which signals to the computer 22 the exact geographical location of the vehicle.

The computer 22 is further connected to receive information from a digital image processor 10, which in turn receives images from cameras 12, 14 and 16. The processor 10 also sends images to a display unit 18 which may be a liquid crystal display (LCD) for displaying images to a vehicle driver. Camera 16 is an interior camera, mountable inside the vehicle so as to provide a comprehensive image of the interior of the vehicle potentially allowing an intruder to be recognised. Camera 14 is a night vision camera, allowing intruder recognition in the dark, and may be mounted either inside or outside the vehicle. Camera 12 is a rearward facing camera, which acts as a reversing aid. Again, this may double as a surveillance camera when required to record a potential intruder into the vehicle.

The computer 22 is further connected to a body control module 38 which incorporates the vehicle's central locking system and also acts to transmit and receive information. The body control module 38 receives signals from sensors 28, 30 and 32 serving to detect a potential or actual intrusion into to the vehicle.

Sensors 28 are perimetric sensors that include such items as door, trunk and hood activated switches and glass break sensors (high frequency microphones).

Sensors 30 are volumetric sensors that detect mass movement primarily within the interior compartment by the use of microwave or ultrasound.

Sensors 32 are additional sensors which can use active infra-red to detect movement external to the vehicle, for use when the vehicle is parked in a remote off-road location. They may also include sensors to detect shock or tilting of the vehicle.

The body control module 38 also receives information from a remote control locking receiver 34 which itself is sensitive to received RF signals. These signals may either be transmitted by a remote control device 34 used by the drive to lock and unlock the vehicle or by another similarly equipped motor vehicle.

The body control module 38 is further connected to a transmitter 36, capable of transmitting a signal at the frequency of the remote locking to allow different vehicles equipped with the security systems to communicate with one other.

The body control module 38 incorporates locks, which include conventional key operated locks (not shown) in the driver and passenger side doors.

The security system is armed simultaneously with the locking of the doors either by using a key or the remote control. The system is configured to run in a number of different modes having different levels of surveillance and different levels of power consumption. The system has the ability to switch between these modes either automatically or the mode may be selected by the operator depending on where the vehicle is parked.

In the maximum diligence mode, images external and internal to the car are stored at regular intervals.

To avoid exceeding the available storage capacity, image recognition software can be used so that, the camera is only activated when a change of the image occurs within a predefined region of the field of view.

In a reduced current mode, images are only recorded when "extended volumetric sensors" detect a person near to the vehicle (e.g. active infra-red, or microwave with a range which extends beyond the window glass).

In a standby mode, the cameras are only activated if a perimetric or internal volumetric alarm has been triggered.

The activation of the system in any operating mode enables sensors 28, 30 and 32 which are arranged to detect an intrusion. The body control module 38 and on board computer 22 analyse the information from these sensors and decide the best course of action to deal with a situation. Such signals may represent a passer by looking in the window of the vehicle, or a shopping trolley contacting with the bodywork, or indeed an intruder successfully gaining entry into the passenger compartment. Each of these warrants a different form of response from the security system.

For example if the additional sensors 32 detect the presence of a person in the immediate vicinity of the vehicle, the computer 22 may sound a short warning tone, to alert the passer by that his presence is known to the vehicle.

If an intrusion is detected by the perimetric and volumetric sensors 28 and 30, it would suggest that there is an intruder inside the vehicle. At this point, the computer 22, would begin to store images from the interior camera 16 and raise an audible siren. The computer 22 is also capable of transmitting its exact location, learned from the GPS receiver 28, and any other relevant information, via the modem and mobile phone 40 to an alert call centre. In doing so, the call centre knows the exact time and place of an intrusion, and if necessary can alert the local police or the vehicle owner.

A potential problem here is the dependence of the system on radio reception required for GPS and mobile phone transmission. In a remote location, there can be a lack of cellular phone signal which would prevent the system from uploading its information. Further to this, GPS requires a simultaneous direct signal from three satellites, meaning the system would be compromised in a car park, tunnel or similar obstruction if one such signal could not be received. Damage to aerials (not shown) attached to the exterior of the vehicle would also compromise both of these systems.

In such a situation, a distress signal is sent via the transmitter 36 to surrounding vehicles capable of receiving such information. If surrounding vehicles are fitted with a similar or compatible system, unaffected by radio reception problems, then they can transmit the information they have received via their own remote central locking receivers (not shown) to the alert call centre.

Reception of a distress signal from a nearby vehicle will instruct the system to move to maximum diligence mode, as a higher level of precaution. It is further possible to instruct nearby vehicles to retransmit the distress signal through the transmitter 36, thereby extending the reach of the signal, and the number of cars attempting to contact the call centre.

It is possible to encode the distress signal with a marker which increments each time the distress signal is regenerated, and ceases to regenerate the signal when the marker exceeds a preset value, thus preventing the signal reaching too far.

The effect of these transmissions is that a network of cars in the same area, form a neighbourhood watch, increasing the difficulty of stealing a car, as all local car security systems would require disabling, to prevent the alert to the theft of one.

As a further possibility, one may provide a panic button on the hand held remote control unit for activating nearby vehicles to turn on their cameras. This can achieve improved personal safety.

It is possible to encode the email address or telephone number of the attacked vehicle's owner into the transmitted signal so that surrounding cars can alert the owner and transmit their pictures to the owner of the vehicle should a central agency not be employed.

It will be appreciated that various modifications may be made to the system without departing from the scope of the invention as set out in the independent claim. For example immobilisation of the vehicle and other such features common in the art may be incorporated into the security system.

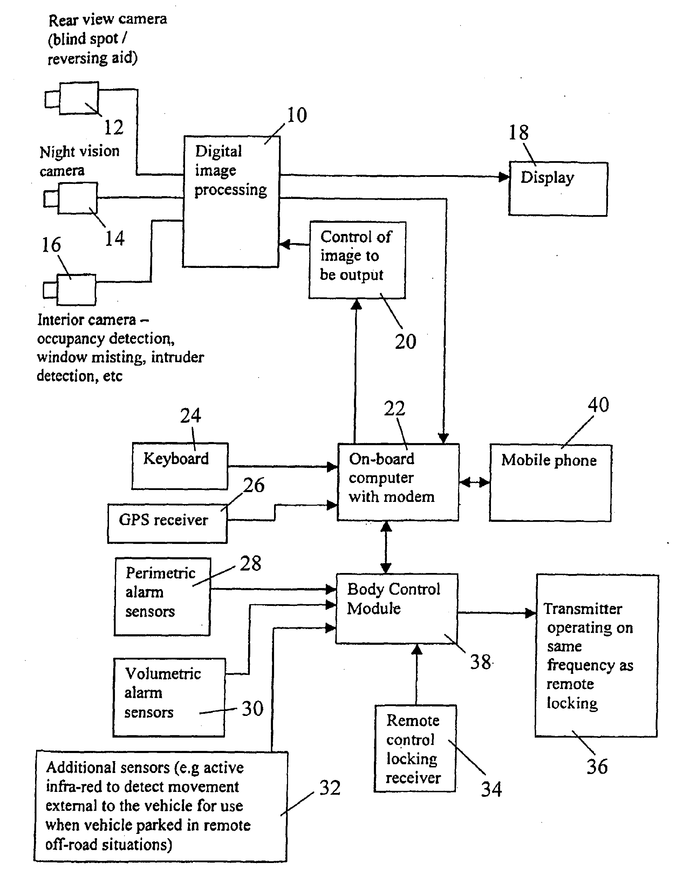

## Claims

1. A security system for a plurality of motor vehicles, each of which has a remote locking system that operates on a frequency common to each vehicle, and a telecommunications system (40), **characterised in that** each vehicle includes a transmitter (36) arranged to transmit a distress signal on said frequency when an alarm condition is detected, and the remote locking system (34) of each vehicle is arranged for receiving said distress signal from a neighbouring vehicle and for initiating an appropriate response.

2. A security system according to claim 1, wherein said appropriate response comprises relaying a further distress signal to a remote location by means of the telecommunications system.

3. A security apparatus for a motor vehicle forming part of a security system according to claim 1, the apparatus including a remote locking system (34,38) and a telecommunications system (40), and a transmitter (36) arranged to transmit a distress signal at the frequency of the remote locking system (34,38), which frequency is common to all motor vehicles within the security system, when an alarm condition is detected.

4. A security apparatus as claimed in claim 3, wherein said telecommunications system (40) is arranged to send a further distress signal to a remote location when an alarm condition is detected.

5. A security apparatus for a motor vehicle forming part of a security system according to claim 1, the apparatus including a remote locking system (34,38) and a telecommunications system (40), wherein the remote locking system includes a receiver (34) connected to a decoder for sensing when a distress signal is received from another near-by vehicle on a common frequency of the remote locking system, and the telecommunications system (40) is arranged for relaying a further distress signal to a remote location in response to receipt of the distress signal from the nearby vehicle.

6. A security apparatus as claimed in any one of claims 3 to 5, further comprising a global positioning system (GPS) receiver (26) for monitoring the position of the or each automotive vehicle.

7. A security apparatus as claimed in any one of claims 3 to 6, further including at least one camera (12,14,16) attached to the motor vehicle for producing internal and/or external pictures of the or each vehicle.

8. A security apparatus as claimed in claim 7, wherein the camera (14) has night vision capability.

9. A security apparatus as claimed in claim 7 or 8, wherein the camera is activated on detection of an alarm condition.

10. A security apparatus as claimed in any of claims 7 to 9, wherein the camera is activated on detection of a distress signal from a nearby vehicle.

11. A security apparatus as claimed in any of claims 7 to 10, further including means (10) for digitally storing images produced by the camera.

12. A security apparatus as claimed in any one of claims 3 to 11, wherein the apparatus is operative to transmit a further distress signal which includes encoded information relating to the email address and/or phone number of the proprietor of the motor vehicle.

13. A security apparatus as claimed in any of claims 3 to 12, further comprising a global positioning system (GPS) receiver (26) for monitoring the position of the or each automotive vehicle, and wherein the apparatus is operative to transmit a further distress signal which includes information relating to the identity of the vehicle and its GPS position.

14. A security apparatus as claimed in one any of claims 3 to 13, which further comprises a camera and wherein the apparatus is operative to transmit a further distress signal which includes images captured by the camera.

15. A security apparatus as claimed in any one of claims 3 to 14, further comprising means for re-emitting a distress signal by means of the respective transmitter when a said distress signal is detected, thereby extending the number of vehicles which receive the distress signal.

16. A security apparatus as claimed in claim 15, further comprising means for encoding the distress signal with a marker which increments each time the distress signal is re-emitted, and ceases to re-emit the signal when the marker exceeds a preset value.

17. A security system as claimed in claim 2, wherein the remote location is a central monitoring station.

## Patentansprüche

1. Sicherheitssystem für mehrere Kraftfahrzeuge, wovon jedes ein fernbedienbares Verriegelungssystem aufweist, das auf einer allen Fahrzeugen gemeinsamen Frequenz arbeitet, sowie ein Telekommunikationssystem (40),
**dadurch gekennzeichnet, daß** jedes Fahrzeug einen Sender (36) aufweist, der ausgelegt ist, ein Notrufsignal auf besagter Frequenz zu senden, wenn eine Alarmbedingung erfaßt wird, und daß das fernbedienbare Verriegelungssystem (34) jedes Fahrzeuges so ausgelegt ist, daß es besagtes Notrufsignal von einem benachbarten Fahrzeug empfängt und eine angemessene Reaktion oder Antwort auslöst.

2. Sicherheitssystem nach Anspruch 1, worin besagte angemessene Reaktion beinhaltet, ein weiteres Notrufsignal über das Telekommunikationssystem an eine entfernte Stelle zu übermitteln.

3. Sicherheitsvorrichtung für ein Kraftfahrzeug, welche Teil eines Sicherheitssystems nach Anspruch 1 ist, wobei die Vorrichtung ein fernbedienbares Verriegelungssystem (34, 38) und ein Telekommunikationssystem (40) aufweist, sowie einen Sender (36), der ausgelegt ist, bei Erfassung einer Alarmbedingung ein Notrufsignal auf der Frequenz des fernbedienbaren Verriegelungssystems (34, 38) zu übertragen, welche Frequenz allen Fahrzeugen innerhalb des Sicherheitssystems gemeinsam ist.

4. Sicherheitsvorrichtung nach Anspruch 3, worin besagtes Telekommunikationssystem (40) ausgelegt ist, ein weiteres Notrufsignal an eine entfernte Stelle zu senden, wenn eine Alarmbedingung erfaßt wird.

5. Sicherheitsvorrichtung für ein Kraftfahrzeug, welches Teil eines Sicherheitssystems nach Anspruch 1 ist, wobei die Vorrichtung ein fernbedienbares Verriegelungssystem (34, 38) und ein Telekommunikationssystem (40) beinhaltet, worin das fernbedienbare Verriegelungssystem einen Empfänger (34) aufweist, der mit einem Decoder verbunden ist, um zu erkennen, wann ein Notrufsignal von einem anderen, in der Nähe befindlichen Fahrzeug auf einer gemeinsamen Frequenz des fernbedienbaren Verriegelungssystems empfangen wird, und das Telekommunikationssystem (40) ausgelegt ist, in Reaktion auf den Empfang des Notrufsignals von dem in der Nähe befindlichen Fahrzeug ein weiteres Notrufsignal an eine entfernte Stelle zu senden oder zu übermitteln.

6. Sicherheitsvorrichtung nach einem beliebigen der Ansprüche 3 bis 5, außerdem einen Empfänger (26) für ein globales Positionierungssystem (GPS) zur Überwachung der Position des oder jedes Kraftfahrzeuges aufweisend.

7. Sicherheitsvorrichtung nach einem beliebigen der Ansprüche 3 bis 6, außerdem wenigstens eine Kamera (12, 14, 16) beinhaltend, welche an dem Kraftfahrzeug angebracht ist, um innere und/oder äußere Aufnahmen des oder jedes Fahrzeuges zu machen.

8. Sicherheitsvorrichtung nach Anspruch 7, worin die Kamera (14) eine Nachtsichtfähigkeit hat.

9. Sicherheitsvorrichtung nach Anspruch 7 oder 8, worin die Kamera beim Erkennen einer Alarmbedingung aktiviert wird.

10. Sicherheitsvorrichtung nach einem beliebigen der Ansprüche 7 bis 9, worin die Kamera beim Erkennen eines Notrufsignals von einem in der Nähe befindlichen Fahrzeug aktiviert wird.

11. Sicherheitsvorrichtung nach einem beliebigen der Ansprüche 7 bis 10, des weiteren Mittel (10) zur digitalen Speicherung von von der Kamera gelieferten Bildern aufweisend.

12. Sicherheitsvorrichtung nach einem beliebigen der Ansprüche 3 bis 11, worin die Vorrichtung derart wirkt, daß sie ein weiteres Notrufsignal überträgt, welches codierte Informationen bezüglich der E-Mail-Adresse und/oder der Telefonnummer des Eigentümers des Kraftfahrzeuges enthält.

13. Sicherheitsvorrichtung nach einem beliebigen der Ansprüche 3 bis 12, des weiteren einen Empfänger (26) für ein globales Positionierungssystem (GPS) zur Überwachung der Position des oder jedes Kraftfahrzeuges beinhaltend, und worin die Vorrichtung derart wirksam ist, daß sie ein weiteres Notrufsignal sendet, welches Informationen bezüglich der Identität des Fahrzeuges und dessen GPS-Position enthält.

14. Sicherheitsvorrichtung nach einem beliebigen der Ansprüche 3 bis 13, welche außerdem eine Kamera beinhaltet, und worin die Vorrichtung derart wirksam ist, daß sie ein weiteres Notrufsignal sendet, welches von der Kamera gemachte Aufnahmen enthält.

15. Sicherheitsvorrichtung nach einem beliebigen der Ansprüche 3 bis 14, des weiteren Mittel zur Weitersendung eines Notrufsignals mittels des entsprechenden Senders beinhaltend, wenn ein besagtes Notrufsignal erfaßt wird, so daß die Zahl der Fahrzeuge erweitert wird, die dieses Notrufsignal empfangen.

16. Sicherheitsvorrichtung nach Anspruch 15, außerdem Mittel zur Codierung des Notrufsignals mit einem Marker enthaltend, der jedesmal um eins aufgestockt wird, wenn das Notrufsignal erneut gesendet wird, und die erneute Sendung des Signals abbricht, wenn der Marker einen vorgegebenen Wert überschreitet.

17. Sicherheitssystem nach Anspruch 2, worin die entfernte Stelle eine zentrale Überwachungsstelle ist.

## Revendications

1. Dispositif de sécurité pour une pluralité de véhicules automobiles, dont chacun comporte un système de verrouillage à distance qui fonctionne sur une fréquence commune à chaque véhicule, et un système de télécommunications (40), **caractérisé en ce que** chaque véhicule comprend un transmetteur (36) agencé pour transmettre un signal de détresse sur ladite fréquence lorsqu'une condition d'alarme est détectée, et le système de verrouillage à distance (34) de chaque véhicule est agencé pour recevoir ledit signal de détresse d'un véhicule avoisinant et pour générer une réponse appropriée.

2. Dispositif de sécurité selon la revendication 1, dans lequel ladite réponse appropriée comprend le relais ou la retransmission d'un signal de détresse supplémentaire vers un emplacement à distance au moyen du système de télécommunications.

3. Dispositif de sécurité pour un véhicule automobile faisant partie d'un dispositif de sécurité selon la revendication 1, le dispositif comprenant un système de verrouillage à distance (34, 38) et un système de télécommunications (40), et un transmetteur ou émetteur (36) agencé pour transmettre un signal de détresse à la fréquence du système de verrouillage à distance (34, 38), dont la fréquence est commune à tous les véhicules automobiles à l'intérieur du dispositif de sécurité, lorsqu'une condition d'alarme est détectée.

4. Dispositif de sécurité selon la revendication 3, dans lequel ledit système de télécommunications (40) est agencé pour envoyer un signal de détresse supplémentaire à un emplacement à distance lorsqu'une condition d'alarme est détectée.

5. Dispositif de sécurité pour un véhicule automobile faisant partie d'un dispositif de sécurité selon la revendication 1, le dispositif comprenant un dispositif de sécurité selon la revendication 1, le dispositif comprenant un système de verrouillage à distance (34, 38) et un système de télécommunications (40), dans lequel le système de verrouillage à distance comprend un récepteur (34) relié à un décodeur pour capter ou détecter lorsqu'un signal de détresse est reçu d'un autre véhicule à proximité sur une fréquence commune du système de verrouillage à distance, et le système de télécommunications (40) est agencé pour relayer un signal de détresse supplémentaire vers un emplacement à distance en réponse à la réception du signal de détresse du véhicule à proximité.

6. Dispositif de sécurité selon l'une quelconque des revendications 3 à 5, comprenant en outre un récepteur de système mondial de localisation (GPS) (26) pour contrôler la position du ou de chaque véhicule automobile.

7. Dispositif de sécurité selon l'une quelconque des revendications 3 à 6, comprenant en outre au moins une caméra (12, 14, 16) fixée au véhicule automobile pour produire des images internes et/ou externes du ou de chaque véhicule.

8. Dispositif de sécurité selon la revendication 7, dans lequel la caméra (14) a une capacité de vision nocturne.

9. Dispositif de sécurité selon la revendication 7 ou 8, dans lequel la caméra est activée lors de la détection d'une condition d'alarme.

10. Dispositif de sécurité selon l'une quelconque des revendications 7 à 9, dans lequel la caméra est activée lors de la détection d'un signal de détresse d'un véhicule à proximité.

11. Dispositif de sécurité selon l'une quelconque des revendications 7 à 10, comprenant en outre un moyen (10) pour stocker numériquement les images produites par la caméra.

12. Dispositif de sécurité selon l'une quelconque des revendications 3 à 11, dans lequel le dispositif est fonctionnel pour transmettre un signal de détresse supplémentaire qui comprend des informations codées concernant l'adresse e-mail et/ou le numéro de téléphone du propriétaire du véhicule automobile.

13. Dispositif de sécurité selon l'une quelconque des revendications 3 à 12, comprenant un récepteur de système mondial de localisation (GPS) (26) pour contrôler la position du ou de chaque véhicule automobile, et dans lequel le dispositif est fonctionnel pour transmettre un signal de détresse supplémentaire qui comprend des informations concernant l'identité du véhicule et sa position GPS.

14. Dispositif de sécurité selon l'une quelconque des revendications 3 à 13, qui comprend en outre une caméra et dans lequel le dispositif est fonctionnel pour transmettre un signal de détresse supplémentaire qui comprend les images capturées par la caméra.

15. Dispositif de sécurité selon l'une quelconque des revendications 3 à 14, comprenant en outre un moyen pour réémettre un signal de détresse au moyen du transmetteur respectif lorsqu'un dit signal de détresse est détecté, étendant ainsi le nombre de véhicules qui reçoivent le signal de détresse.

16. Dispositif de sécurité selon la revendication 15, comprenant en outre un moyen pour coder le signal de détresse avec un repère ou un identifiant qui augmente ou est incrémenté chaque fois que le signal de détresse est réémis, et cesse de réémettre le signal lorsque le repère dépasse une valeur préétablie.

17. Dispositif de sécurité selon la revendication 2, dans lequel l'emplacement à distance est une station de contrôle centrale.
